# EUROPEAN PATENT APPLICATION

(11) **EP 3 930 292 A1**
(43) Date of publication of application: **29.12.2021**
(21) Application number: 21182162.4
(22) Date of filing: 28.06.2021
(51) Int. Cl.: H04L 29/08, H04L 29/06

(54) **METHOD AND SYSTEM FOR EFFICIENTLY AND SECURELY ROUTING REQUESTS FROM URLS WITH THE SAME UNIQUE DOMAIN NAME TO A WEB SERVER OR A URL REDIRECTION SERVER WITH PRIORITY FOR THE FIRST ONE**

(30) Priority: 26.06.2020 EP 20182741
(71) Applicant: Radiate Capital Ltd, D06 F3P4 Dublin 6 (IE)
(72) Inventor: De Guz, Davide, Dublin 6, D06 F3P4 (IE); Antonio, Romano, Dublin 6, D06 F3P4 (IE)
(74) Representative: Purdylucey Intellectual Property

(57) **Abstract**

The present invention relates to a method and system for delivering content over a network, and more particularly to a method and system for delivering content from a plurality of servers such as a main domain web server and a redirection server, using the same domain name. The invention provides a method to deliver content over a network from a plurality of servers such as a main domain web server and a redirection server, using the same domain name. The present invention hence makes it possible to deliver content from a web server and a redirection server over the same domain name. This enables safe and efficient creation of branded links using the branded domain name of an organisation. Branded links using the same branded domain name of an organisation enhances brand awareness and brand recognition. Such links are also more trusted by readers since the link is branded to give the reader an understanding of where the link will lead them, therefore, increasing the trust attributed to a link.

## Description

### Field

The present disclosure relates to a method and system for delivering content over a network, and more particularly to a method and system for delivering content from a plurality of servers using the same domain name.

### Background

In today's world wherein approximately one billion names are looked for on various search engines almost on a daily basis, and 85% of customers conduct online research on the entities/individuals that they would want to engage with, increasing brand recognition and reinforcing brand awareness is a key consideration for organisations. Consequently, organisations have been widely using branded links for sharing content in social media and the like. A branded link is a Uniform Resource Locator (URL) built around a brand name or a related term that helps to associate an organisation a product or a project with the weblinks, content and information that is shared. A branded link aligns the content shared with the brand name of the organisation, and more importantly enhances brand awareness, the brand's image, credibility and trust in the organisation. Example of a branded link: https://CompanyName.com/Keyword

Branded links are managed trough specific software or services that are typically built around a redirection server. The redirection server reroutes the user device who made the click on an URL to another URL that request a web server to serve the content.

The most effective branded links are the ones that are created using the organisation's (or product or project) main domain name, that is, the domain name used for the main website that represents the organisation (or product or project). Most organisations already use their own domain name in their official e-mail addresses. However, unlike e-mail addresses that have a dedicated Domain Name System (DNS) record called MX record, it is not possible to use the main domain name to point to both the company website server and to a redirection server that manages the branded links. This is because if different address records of the same domain name point to different IP's of different servers, there is no way for the DNS servers to determine the destination of a link, and the DNS server will result in redirecting traffic randomly. Due to this reason, systems and methods known in the art, use a particular domain name for the main website (of an organisation) which point to the main domain web server and another domain name for branded links which point to a redirection server.

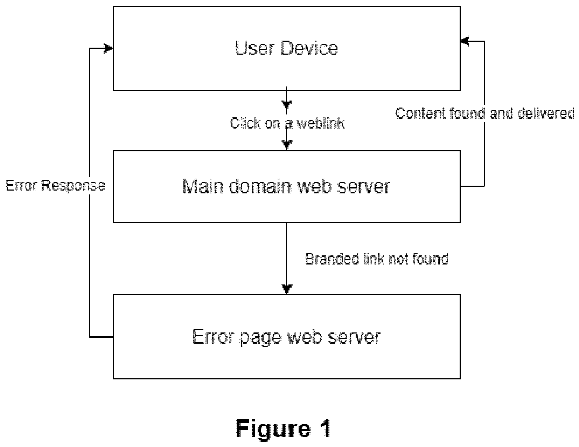

To illustrate, in prior art systems and methods, the domain name *<CompanyName.tld>* is dedicated to the main domain web server while for redirection servers, a different top-level domain *<CompanyName.tld (different tld)>* or a third level domain name *<Redirect.CompanyName.tld>* or an alternative domain name *<Alternativedomain.tld>* is used. Consequently, as illustrated in figure 1, when a client device requests content by clicking on a weblink, the request is directed to the web server it points to, and said web server delivers content to the client device if the content is available. If the content is unavailable or does not exist in the web server, a standard error response code such as 'Hypertext Transfer Protocol (HTTP) 404' is delivered to the client device by an error page web server.

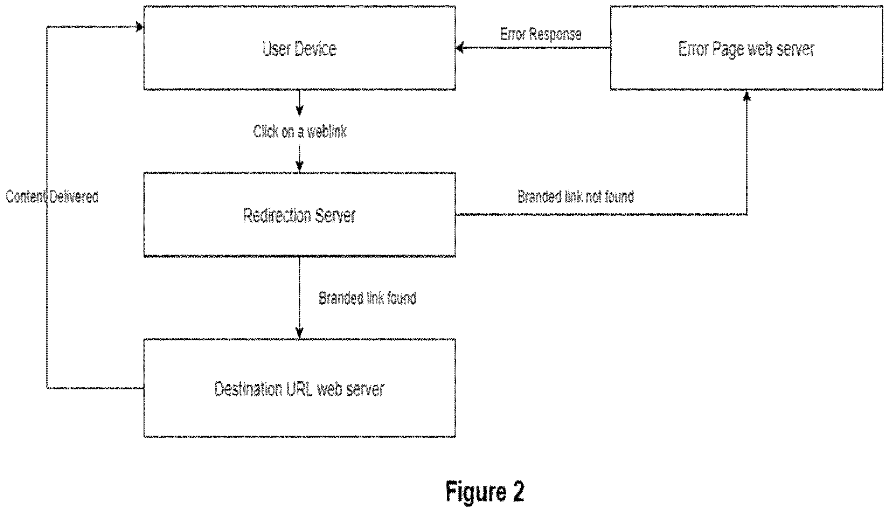

Likewise, as illustrated in figure 2, when a client device requests content by clicking on a weblink which points to a redirection server, the redirection server reroutes the client device to a destination-URL-webserver using a destination URL if the clicked weblink is managed by the redirection server. If the requested content is not managed by the redirection server, a standard error response code such as 'Hypertext Transfer Protocol (HTTP) 404' is delivered to the client device by an error page web server.

In the case when the internet user clicks on an URL that is composed using a specific domain name (for example www.acme.com/1234) only one server can receive the request and decide what to show or where to redirect the final user. A technical problem for the server is how to decide, safely and efficiently, where to send the request and how the request can be prioritised to a server or another. The customer wants to be sure that the main web server will continue to receive the request with the same efficiency and speed that it has before the implementation of this method. Moreover, the customer needs to control of the routing to the main pages, for security reasons. All existing solutions proposed to date are cumbersome, slow and complex to implement.

Patent Publication number US2006/288119, Kim Jooyong et al, discloses a multi-level redirection method, a first level redirection of a first request is performed based on static information. Jooyong teaches how to deliver webpages that have multiple objects, for example video, image, text etc. Jooyong discloses delivering contents from multiple servers for the same request. A problem with this approach is that safe and efficient creation of branded links using the branded domain name of an organisation is not achieved. In addition generic URL links do not provide a user with a trust factor to access the link as the user may not recognise or trust the link to access the content.

There is therefore an unresolved and unfulfilled need in the art, for a means to deliver content from a branded main domain web server.

### Summary of the Invention

The present invention relates to a method and system, as set out in the appended claims, for delivering content over a network, and more particularly to a method and system for delivering content from a plurality of servers such as a main domain web server and a redirection server, using the same domain name. The invention provides a method to deliver content over a network from a plurality of servers such as a main domain web server and a redirection server, using the same domain name. In essence the present invention provides a method and system to use the same domain name to serve the main website contents and use a branded URL shortener in order to brand URL links giving priority to the main website/server contents. The invention allows for content to be delivered by the main domain web server or whether a URL should be redirected to a redirection server, depending on the application required.

The present invention hence makes it possible to deliver content from a web server and a redirection server over the same domain name. This enables safe and efficient creation of branded links using the branded domain name of an organisation. Branded links using the same branded domain name of an organisation enhances brand awareness and brand recognition. Such links are also more trusted by readers since the link is branded to give the reader an understanding of where the link will lead them, therefore, increasing the trust attributed to a link. Branded links comprising the brand name of an organisation is also easier to remember than a generic URL.

The present invention enables the use of the same specific and unique domain name (for example, www.acme.com) to serve a company website and a branded link management service that is used to create and manage branded links. The invention solves the aforementioned problems with a fast, easy, efficient and secure setup on the first line server. The system and method can send the traffic to all existing pages to the main web server and the rest to a link redirect server. The system and method can then send the traffic to non-existing pages or non-existing redirect rules to a specific destination URL.

In one embodiment the present invention provides a system configured to deliver content over a network from a plurality of servers such as a main domain web server and a redirection server using the same domain name.

In one embodiment the present invention provides a method to prioritize usage of a main domain web server to deliver content and a redirection server to redirect a user device to a destination URL, using the same domain name.

In one embodiment the present invention provides a system configured to prioritize usage of a main domain web server to deliver content and a redirection server to redirect a user device to a destination URL, using the same domain name.

In one embodiment the present invention provides a method for delivering content over a network is provided. Said preferred embodiment further prioritizes usage of a main domain web server to deliver content and a redirection server to redirect a user device to a destination URL, using the same domain name. The method comprises the steps of requesting content by inputting a domain name URL from a user device connected to a network and checking for the requested content in a main domain web server. If the content is available in the main domain web server, it is served to the user device. If the content is not available, the domain name is rewritten by adding a level to the domain name which in turn generates a secondary domain name.

The user device is then redirected to the secondary domain name and a new request for content is created from the user device to a redirection server using the secondary domain name.

The redirection server checks for the secondary domain name and if found, the user device is rerouted to a destination URL server using a destination URL. The requested content is then delivered to the user device from the destination URL server. If the secondary domain name URL is not found in the redirection server, the user device is redirected to a default page with an error alert that the content does not exist.

As per another preferred embodiment of the present invention, a system is provided for delivering content over a network. The disclosed system further prioritises usage of a main domain web server to deliver content and a redirection server to redirect a user device to a destination URL, using the same domain name. The system comprises a user device, a main domain web server, a redirection server, a destination URL server and an error page web server.

The user device is connected to the network and configured to request content by inputting a domain name URL. The main domain web server receives the request for content from the user device and delivers the content to the user device if the requested content is available in the main domain web server. If the requested content is unavailable, the main domain web server is configured to rewrite the domain name by adding a level to it and further generating a secondary domain name if said content is not available in the main domain web server. The rewrite can both add a level to the previous domain of the URL as well as create a completely new domain name URL. The main domain web server further redirects the user device to the secondary domain name.

The user device creates a new request for content using the secondary domain name. The redirection server receives the new request for content from the user device. If the secondary domain name is found in the redirection server, the user device is redirected to a destination URL server using a destination URL. If the secondary domain name is not found in the redirection server, the user device is redirected to the error page web server which delivers a default message to the user device stating that the content does not exist.

In one embodiment of the present invention the redirect server is configured to be prioritised over the main domain server.

In the context of the present invention the main domain can point to different servers that deliver content on Internet. Like Web server, FTP server, and other servers.

It will be appreciated that rewrite system could be also be configured with other kind of servers like FTP server and redirect server.

There is also provided a computer program comprising program instructions for causing a computer program to carry out the above method which may be embodied on a record medium, carrier signal or read-only memory.

The present invention hence provides a robust and simple solution to the problems identified in the art.

### Brief description of drawings

The invention will be more clearly understood from the following description of an embodiment thereof, given by way of example only, with reference to the accompanying drawings, in which:-
Figure 1 illustrates a prior art method wherein a main domain web server manages a domain;
Figure 2 illustrates a prior art method wherein a redirection server manages a domain;
Figure 3 illustrates a method according to a preferred embodiment of the present invention;
Figure 4 illustrates a method according to a preferred embodiment of the present invention;
Figure 5 illustrates a system according to a preferred embodiment of the present invention; and
Figure 6 illustrates a system according to a preferred embodiment of the present invention.

### Detailed Description of Drawings

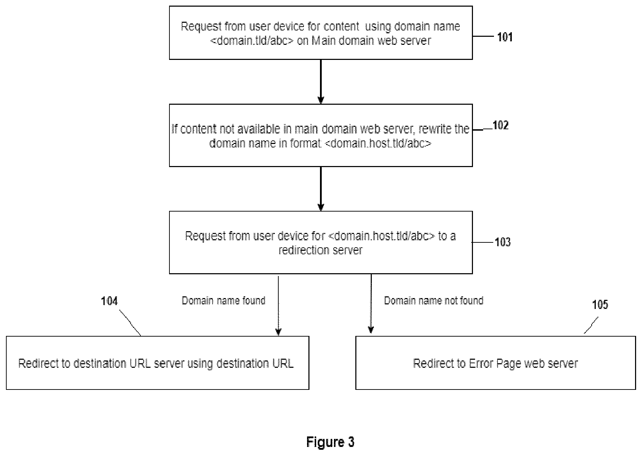

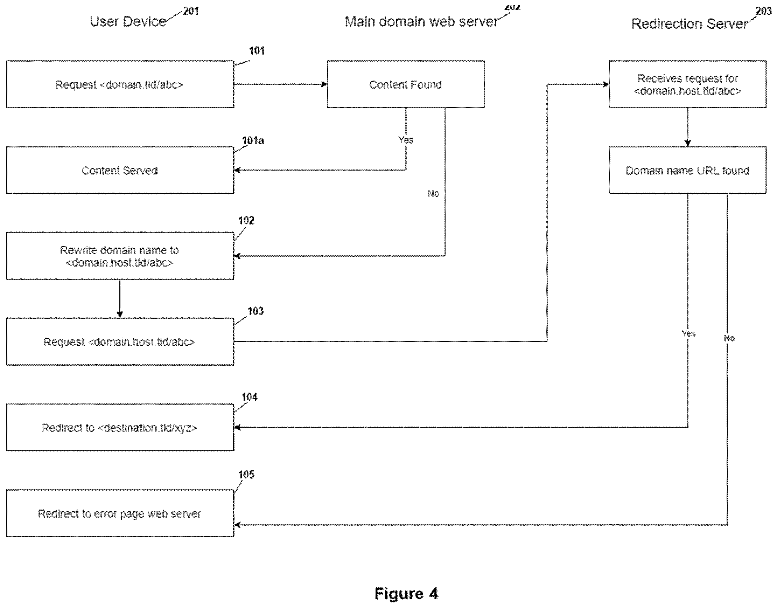

Referring to Figure 3 and Figure 4, the method as per a preferred embodiment of the present invention comprises steps of firstly requesting for content from a network connected user device 201 by inputting a domain name URL 101, for example in the format <domain.tld/abc>. The request is made to a main domain web server 202 which checks if the content is existing within the server 202. If the content is available in the main domain web server 202, it is served to the user device 101a.

If the content is unavailable, the main domain web server 202 is configured to rewrite the inputted domain name by adding an additional level to it, thereby generating a secondary domain name 102. To illustrate, <domain.tld/abc> is rewritten to <domain.host.tld/abc>. The user device is then redirected to the secondary domain name by the main domain web server 202. Further, a new request for content is created from the user device 201 using the secondary domain name 103. The new request is routed to a redirection server 203. The redirection server 203 checks if the secondary domain name URL is available, that is for example <domain.host.tld/abc>, the redirection server checks if the secondary domain name URL is a branded link managed by it. Since this is a secondary domain name it can be managed by the redirection server 203 because it is essentially another domain name. The redirection server can be configured to recognise the URL as that coming from the main domain due to the structure and path of the secondary domain name. It will be appreciated that other mechanisms can be used to associate the main domain with the secondary one.

If the secondary domain name is available in the redirection server 203, the user device 201 is redirected by the redirection server 203 to a destination URL server 204 using a destination URL 104. The destination URL server 204 is a generic web server which is configured to manage the content requested by the user. If the secondary domain name is unavailable in the redirection server 203, the user device is redirected to a fallback error page web server which serves a standard error response code such as a Hypertext Transfer Protocol (HTTP) 404 standard response code, communicating that the content does not exist 105.

As per said preferred embodiment of the present invention, priority is assigned to the main domain web server to deliver content.

In another embodiment of the present invention, priority is assigned to the redirection server. As per said embodiment, content is first requested from a network user device to a redirection server by inputting a domain name. If the URL is managed by the redirection server, the redirection server redirects the user device to a destination URL. The user device then creates a new request to the main domain web server using the destination URL. If the content is available in the main domain web server, it is delivered to the user device. If the content is unavailable in the main domain web server or if URL inputted from the user device is not managed by the redirection server, the user device is redirected to a fallback error page web server which serves a standard error response code such as a Hypertext Transfer Protocol (HTTP) 404 standard response code, communicating that the content does not exist.

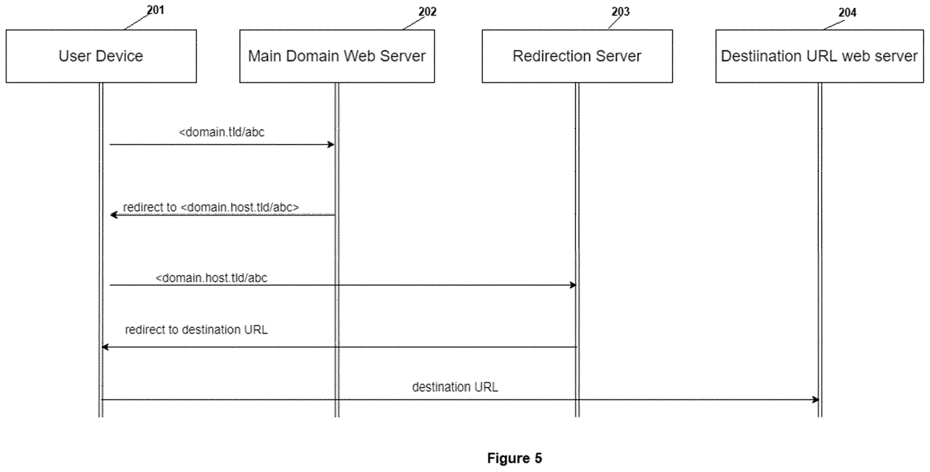

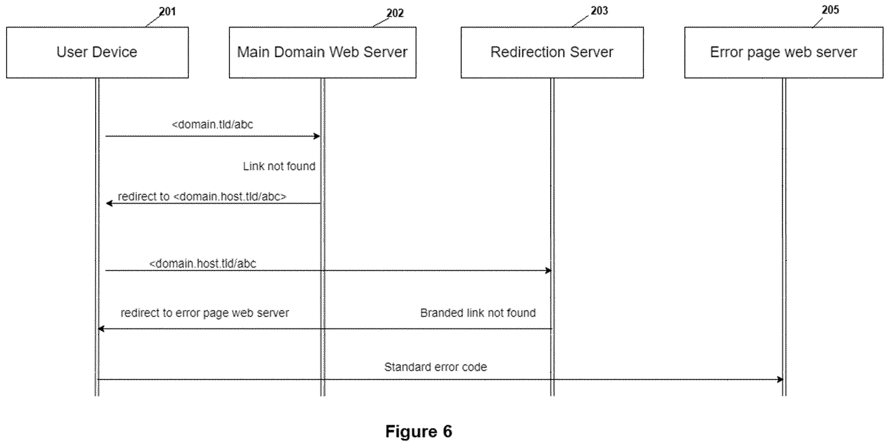

Referring to figure 5 and figure 6, the system as the per the present invention comprises a user device 201, a main domain web server 202, a redirection server 203, a destination URL server 204 and an error page web server 205. As shown, a request for content by inputting a domain name is made from a network connected user device 201 to a main domain web server 202, for example in the format <domainname.tld/abc>. If the content is managed by the main domain web server 202, it is delivered to the user device 201. The main domain web server 202 is configured to rewrite the domain name and to generate a secondary domain name, if the request content is not managed by it. This basically means that a level is added to the domain name to point to a secondary domain name. To illustrate <domain name.tld/abc> is rewritten to <domain name.host.tld/abc>.

The user device 201 is redirected by the main domain web server 202 to the secondary domain name. The user device is further configured to create a new request using the secondary domain name to a redirection server 203. The redirection server 204 checks if the secondary domain name is managed by it and if that is the case, the redirection server 203 is configured to redirect the user device 201 to a destination URL web server 204 using a destination URL. The destination URL web server 204 which is a generic web server delivers the requested content to the user device 201. If the secondary domain name is not found in the redirection server 203, the user device is redirected to a fallback error page web server 205 which delivers a standard error response code such as a Hypertext Transfer Protocol (HTTP) 404 standard response code, to the user device 201.

The present invention hence enables usage of the same domain name to deliver content at the same time from the main domain web server and a redirection server.

Although the present invention has been described with reference to specific embodiments, this description is not meant to be construed in a limiting sense. Various modifications of the disclosed embodiments, as well as alternate embodiments of the subject matter, will become apparent to persons skilled in the art upon reference to the description of the subject matter. It is therefore contemplated that such modifications can be made without departing from the spirit or scope of the present invention as defined.

Further, a person ordinarily skilled in the art will appreciate that the various illustrative logical/functional blocks and process steps described in connection with the embodiments disclosed herein may be implemented as electronic hardware, or a combination of hardware and software. To clearly illustrate this interchangeability of hardware and a combination of hardware and software, various illustrations and steps have been described above, generally in terms of their functionality. Whether such functionality is implemented as hardware or a combination of hardware and software depends upon the design choice of a person ordinarily skilled in the art. Such skilled artisans may implement the described functionality in varying ways for each particular application, but such obvious design choices should not be interpreted as causing a departure from the scope of the present invention.

The process described in the present disclosure may be implemented using various means. For example, the apparatus described in the present disclosure may be implemented in hardware, firmware, software, or any combination thereof. For a hardware implementation, the processing units, or processors(s) or controller(s) may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, or a combination thereof.

For a firmware and/or software implementation, software codes may be stored in a memory and executed by a processor. Memory may be implemented within the processor unit or external to the processor unit. As used herein the term "memory" refers to any type of volatile memory or nonvolatile memory.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. a memory stick or hard disk. The carrier may be an electrical or optical signal which may be transmitted via an electrical or an optical cable or by radio or other means.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A method for delivering content from a main domain web server and a redirection server using a same domain name as the domain name of the main domain web server, the method comprising the steps of:
a) requesting content by inputting a domain name URL from a user device connected to the network ;
b) checking for the requested content in the domain web server;
c) delivering the requested content to the user device if said content is available in the main domain web server;
d) rewriting the domain name by adding a level to said domain name and generating a secondary domain name, if said content is not available in the main domain web server;
e) redirecting the user device to the secondary domain name;
f) creating a request for content to the redirection server from the user device using the secondary domain name;
g) rerouting the user device to a destination Uniform Resource Locator (URL) server using a destination URL, if the secondary domain name is found in the redirection server; and
h) delivering the content to the user device from the destination URL server.

2. The method as claimed in claim 1, further comprising the step of delivering a standard error response code to the user device if the secondary domain name in not found in the redirection server.

3. The method as claimed in claim 2, wherein the standard error response code is a Hypertext Transfer Protocol (HTTP) 404 standard response code.

4. A method for delivering content from a main domain web server and a redirection server using a same domain name as the domain name of the main domain web server, the method comprising the steps of:
a) requesting content by inputting a domain name from a user device connected to a network;
b) checking for the requested content in the redirection server;
c) redirecting the user device to a destination Uniform Resource Locator (URL), if the domain name is found in the redirection server;
d) requesting content from the main domain web server using the destination URL; and
e) delivering requested content to the user device, if the destination URL points to content available in the main domain web server.

5. The method as claimed in claim 4, further comprising the step of delivering a standard error response code to the user device if the destination URL points to content not available in the main domain web server.

6. The method as claimed in claim 5, wherein the standard error response code is a Hypertext Transfer Protocol (HTTP) 404 standard response code.

7. A system for delivering content from a domain web server and a redirection server using a same domain name as the domain name of the main domain web server, the system comprising;
a user device connected to a network and configured to request content by inputting a domain name URL;
a main domain web server adapted to receive the request for content from the user device, the main domain web server configured to: deliver content to the user device if said content is available in the main domain web server, rewrite the domain name by adding a level to said domain name and to further generate a secondary domain name if said content is not available in the main domain web server, and redirect the user device to the secondary domain name; and
the redirection server is adapted to receive a request for content from the user device using the secondary domain name, wherein the redirection server is configured to reroute the user device to a destination Uniform Resource Locator (URL) server using a destination URL, if the secondary domain name is found in the redirection server.

8. The system as claimed in claim 7 further comprising an error page web server configured to deliver a standard error response code to the user device if the secondary domain name in not found in the redirection server.

9. The system as claimed in claim 8, wherein the standard error response code is a Hypertext Transfer Protocol (HTTP) 404 standard response code.
